# EUROPÄISCHE PATENTANMELDUNG

(11) **EP 1 690 814 A1**
(43) Veröffentlichungstag der Anmeldung: **16.08.2006**
(21) Anmeldenummer: 06000259.9
(22) Anmeldetag: 07.01.2006
(51) Int. Cl.: B65G 47/66, B65G 27/10

(54) **Transporteinrichtung**

(30) Priorität: 11.02.2005 DE 102005006203
(71) Anmelder: KHS AG, 44143 Dortmund (DE)
(72) Erfinder: Slowak, Thorsten, 44799 Bochum (DE)

(57) **Zusammenfassung**

Bei einer Transportvorrichtung (1) für Flaschen (2) oder dgl. Behälter, mit wenigstens zwei jeweils eine Transportfläche (3.1,4.1) für die Behälter (2) bildenden und in einer Transportstrecke aufeinander folgenden Transporteuren (3,4), mit einem Übergabe- oder Hilfstransporteur (6), dessen von wenigstens einem Transportelement (7) gebildete Transportfläche (7.1) die Transportflächen (3.1,4.1) der Transporteure (3,4) miteinander verbindet, sowie mit einem Schwingungsantrieb zur Erzeugung einer oszillierenden Schwingungsbewegung des wenigstens einen Transportelementes (7) des Hilfstransporteurs (6) in einer horizontalen, in Förderrichtung des Hilfstransporteurs orientierten Achse (C), ist der Schwingungsantrieb so ausgebildet, dass die Schwingungsbewegung des wenigstens einen Transportelementes (7) des Hilfstransporteurs (6) zugleich auch eine vertikale Bewegungs komponente aufweist.

## Beschreibung

Die Erfindung bezieht sich auf eine Transporteinrichtung gemäß Oberbegriff Patentanspruch 1.

Bei einer Transportstrecke oder Transporteinrichtung für Flaschen oder dergleichen Behälter besteht vielfach die Situation, dass zwei Transporteure im Verlauf der Transportstrecke aneinander anschließen, und zwar z.B. über ein Überschub- oder Gleitblech, über welches die Behälter von einem Transporteur durch Überschieben an den in der Transportstrecke folgenden Transporteur übergeben werden. Im Bereich derartiger Überschub- oder Gleitbleche sind Probleme beim Transport nicht auszuschließen.

Zur Behebung dieses Nachteils ist bereits bekannt (DE 93 00 609 U1), im Anschluss- oder Übergangsbereich zwischen zwei Transporteuren als Übergabe- oder Hilfstransporteur ein Übergabeblech vorzusehen, welches durch einen Schwingungsantrieb oszillierend in einer in der Förderrichtung orientierten horizontalen oder annähernd horizontalen Achse bewegt wird. Voraussetzung für die Funktion ist bei dieser bekannten Transporteinrichtung aber, dass das Übergabeblech eine in Transportrichtung schräg abfallende Transportebene bildet, also ein Niveauunterschied zwischen den Transportflächen oder -ebenen der Transporteure vor und nach dem Hilfstransporteur besteht, was nicht in allen Fällen realisierbar und/oder erwünscht ist.

Aufgabe der Erfindung ist es, eine Transporteinrichtung aufzuzeigen, die einen problemlosen Transport von Flaschen oder dgl. Behälter oder Gebinden ermöglicht. Zur Lösung dieser Aufgabe ist eine Transporteinrichtung entsprechend dem Patentanspruch 1 ausgebildet.

Bei der erfindungsgemäßen Transporteinrichtung ist der Schwingungsantrieb des Übergabe-oder Hilfstransporteurs so ausgeführt, dass bedingt insbesondere durch die vertikale Bewegungskomponente und unter Berücksichtigung der Masse der Behälter die von diesen aufgrund ihres Behältergewichtes auf die Transportfläche des Hilfstransporteurs ausgeübte Normalkraft während des Rückhubes der Schwingbewegung kurzzeitig vollständig aufgehoben oder aber zumindest soweit reduziert wird, dass während des Rückhubes ein Mitführen der Behälter mit dem Transportelement des Hilfstransporteurs nicht erfolgt.

Bevorzugt ist der Schwingungsantrieb des Übergabe- oder Hilfstransporteurs weiterhin so ausgeführt, dass während des Vorwärtshubes der Schwingbewegung bedingt insbesondere durch die vertikale Bewegungskomponente und unter Berücksichtigung der Masse der Behälter die von diesen aufgrund ihres Behältergewichtes auf die Transportfläche des Hilfstransporteurs ausgeübte Normalkraft kurzzeitig vollständig aufgehoben wird, die Behälter also nach einer entsprechenden Beschleunigung in Förderrichtung ihren Bodenkontakt mit der Transportebene des Hilfstransporteurs kurzzeitig vollständig verlieren und dabei Mikrosprünge in Transportrichtung ausführen, wodurch eine sehr wirksame Förderwirkung erreicht wird.

Ein weiterer Vorteil der erfindungsgemäßen Transporteinrichtung besteht u. a. auch darin, dass eine Neigung für die Transportfläche des Hilfstransporteurs und damit ein Niveauunterschied zwischen der Transportebene der beiden über den Zwischentransporteur aneinander anschließenden Transporteure nicht erforderlich ist.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in schematischer, perspektivischer Darstellung eine Transportstrecke für Flaschen oder dgl. Behälter mit zwei in einer Transportrichtung aneinander anschließenden Transporteuren und einem zwischen den beiden Transporteuren angeordneten Übergabe- oder Hilfstransporteur;
- Fig. 2: in vereinfachter Schnittdarstellung den Schwingungsantrieb des Übergabe- oder Hilfstransporteurs, zusammen mit einem die Transportebene des Hilfstransporteurs bildenden Überschub- oder Gleitblech und dem bezogen auf die Transportrichtung vorderen Ende des in Transportrichtung anschließenden Transporteurs;
- Fig. 3: in einer schematischen Schnittdarstellung ähnlich Figur 2 eine weitere mögliche Ausführungsform.

Die in den Figuren allgemein mit 1 bezeichnete Transporteinrichtung zum Transportieren von Flaschen 2 oder dgl. Behälter umfasst u. a. zwei Transporteure 3 und 4, von denen beispielsweise der Transporteur 4 zum Wegführen der Flaschen 2 von einer Behandlungsmaschine, beispielsweise zum Wegführen der gefüllten und verschlossenen Flaschen 2 von einem Pasteur dient, während der Transporteur 3 die Transport- oder Förderstrecke der Behandlungsmaschine, beispielsweise des Pasteurs bildet, auf der die Flaschen 2 durch die Behandlungsmaschine, beispielsweise durch einen Tunnelofen des Pasteurs hindurchgeführt werden.

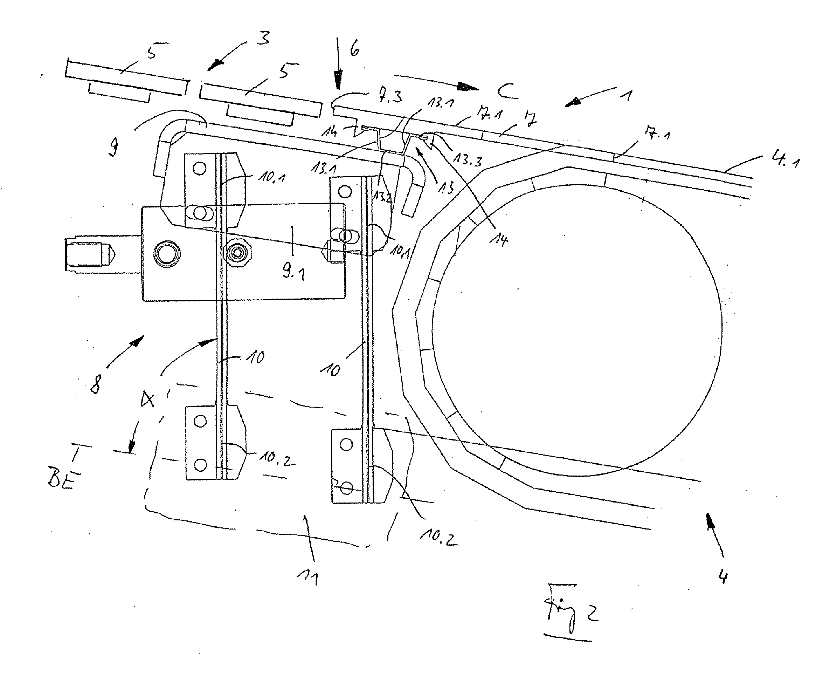

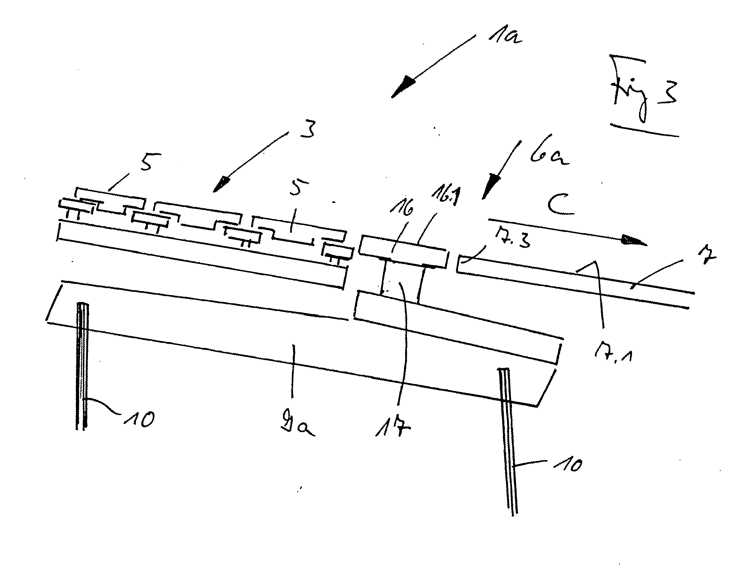

Die Transporteure 3 und 4, auf denen bzw. auf deren Transportflächen 3.1 bzw. 4.1 die Flaschen 2 jeweils aufrechtstehend, d. h. mit ihrer Flaschenachse in vertikaler Richtung orientiert angeordnet sind, sind beispielsweise jeweils von mehren seitlich an einander anschließenden Transportbändern oder Scharnierbandketten 5 (Figuren 2 und 3) gebildet, die durch entsprechende Antriebe umlaufend angetrieben sind, sodass sich für den Transporteur 3 die in den Figuren mit A und für den Transporteur 4 die in den Figuren mit B angegebenen horizontalen oder annähernd horizontale und rechtwinklig zueinander orientierten Förderrichtungen ergeben.

Bei der dargestellten Ausführungsform ist die Anzahl der Transportbänder beim Transporteur 3 größer ist als beim Transporteur 4, sodass der Transporteur 3 auch eine im Vergleich zum Transporteur 4 größere Förderbreite aufweist. Zwischen den beiden Transporteuren 3 und 4 ist der Übergabe- oder Hilfstransporteur 6 vorgesehen, dessen Transportfläche oder -ebene von der Oberseite 7.1 eines oder mehrerer Überschub- oder Gleitbleche 7 gebildet ist, wobei bei Verwendung von mehreren derartigen Blechen diese in einer horizontalen Achsrichtung senkrecht zur Transportrichtung C des Hilfstransporteurs 6 und parallel zur Transportrichtung A des Transporteurs 3 aneinander anschließen.

Bei der dargestellten Ausführungsform ist die Transportrichtung C achsgleich mit der Transportrichtung B des Transporteurs 4. Weiterhin liegen die Transportebenen der Transporteure 3 und 4 sowie des Hilfstransporteurs 6 in einer gemeinsamen horizontalen Ebene.

Die Figur 2 zeigt den Hilfstransporteur 6 mehr im Detail. Dargestellt ist wiederum das in Transportrichtung vordere Ende des Transporteurs 4 sowie das mit dem Randbereich 7.2 frei auf dem Transporteur 4 bzw. auf der von diesem Transporteur gebildeten Transportfläche 4.1 aufliegende Überschubblech 7. Dargestellt ist in der Figur 2 weiterhin der in dieser Figur allgemein mit 8 bezeichnete Schwingungsantrieb des Hilfstransporteurs 6. Dieser Schwingungsantrieb 8 umfasst im Wesentlichen einen, bei der dargestellten Ausführungsform von einem U-Profil gebildeten Träger 9, der sich in horizontaler Richtung über die gesamte Breite des Hilfstransporteurs 6 erstreckt, und zwar senkrecht zur Transportrichtung C. Der Träger 9 ist beidendig mit jeweils zwei blattfederartigen Federelementen 10 gefedert an einem Maschinenrahmen 11 der Transporteinrichtung 1, beispielsweise an einem Rahmen des Transporteurs 4 gehalten. Hierfür ist jedes Federelement 10 mit seinem oberen Ende an einer Traglasche 9.1 des Trägers 1 und mit seinem unteren Ende 10.2 am Rahmen 11 so befestigt dass die Federelemente 10 von dem Träger 9 schräg nach unten wegstehen und sämtliche Federelemente 10 jeweils parallel zueinander angeordnet und auch an den beiden Enden des Trägers 9 voneinander beabstandet sind. Bei der dargestellten Ausführungsform liegt jedes Federelement 10 an einem Ende des Trägers 9 in einer gemeinsamen Ebene mit einem Federelement 10 am anderen Ende des Trägers. Weiterhin sind sämtliche Federelemente 10 entgegen der Transportrichtung C derart geneigt, dass die Längserstreckung dieser Federelemente an den unteren Enden 10.2 mit einer horizontalen Bezugsebene BE einen Winkel α kleiner als 90° einschließt, der sich entgegen der Transportrichtung C öffnet.

Durch die von den Federelementen 10 gebildete Federanordnung ist somit der Träger 9 für eine Schwingungsbewegung gefedert an dem Rahmen 11 gehalten, die wegen der Schrägstellung der Federelemente 10 sowohl eine horizontale Komponente parallel zur Förderrichtung C als auch eine vertikale Komponente senkrecht zur Förderrichtung C aufweist. Zur Erzeugung einer Schwingungsbewegung mit diesen beiden Komponenten ist ein Antrieb 12 vorgesehen, der zwischen dem Rahmen 11 und dem Träger 9 wirkt und beispielsweise ein elektromagnetischer, elektromotorischer, hydraulischer und/oder mechanischer Antrieb oder aber ein Piezo-Antrieb ist. Grundsätzlich besteht auch die Möglichkeit anstelle des zwischen dem Träger 9 und dem Rahmen 11 wirkenden Antrieb einen Vibrator oder Schwingungserzeuger am Träger 9 vorzusehen, beispielsweise in Form mindestens eines motorischen Antriebs mit Unwucht.

An der Oberseite ist am Träger 9 ein Halte- oder Befestigungsprofil 13 vorgesehen, mit dem das jeweilige Überschubblech 7 im Bereich seines dem Transporteur 4 entferntliegenden Endes 7.3 mit dem Träger 9 verbunden ist. Das Befestigungsprofil 13, welches an dem dem Transporteur 4 zugewandten Rand des Trägers 9 befestigt ist und mit seiner Längserstreckung horizontal quer zur Transportrichtung C liegt, ist bei der dargestellten Ausführungsform aus Federstahl als U-Profil mit den beiden Schenkeln 13.1, mit dem diese Schenkel verbindenden Jochabschnitt 13.2 sowie mit nach außen wegstehenden Abwinklungen 13 an den freien Rändern der Schenkel 13.1 hergestellt. An dem mit dem Jochabschnitt 13.2 an der Oberseite des Trägers 9 befestigten und nach oben hin offenen Befestigungsprofil 13 ist dann das jeweilige Überschubblech 7 durch Aufklipsen befestigt. Das Überschubblech 7 ist hierfür an seiner Unterseite mit einem U-schienenartigen Befestigungsprofil 14 ausgebildet, in welches das Befestigungsprofil 13 mit den Abwinklungen 13.3 und den diese Abwinklungen aufweisenden Enden der Schenkel 13.1 hineinreicht , so dass die Abwinklungen 13.3 Hinterschneidungen an den Innenflächen des Befestigungsprofils 14 hintergreifen.

Durch die Ausbildung des Befestigungsprofils 13 als federndes Profil ist nicht nur die Montage des wenigstens einen Überschubbleches 7 durch Aufklipsen sehr vereinfacht, sondern durch die federnde Ausbildung des Befestigungsprofils 13 ergibt sich auch eine gelenkige Verbindung zwischen dem Träger 9 und dem wenigstens einem Überschubblech 7, sodass eine Schwingungsbewegung des im Bereich des Randes 7.2 auf dem Transporteur 4 frei aufliegenden Überschubbleches 7 zusammen mit dem Träger 9 möglich ist.

Mit dem Antrieb 12 sind der Träger 9 und mit diesem auch das Überschubblech 7 aus der in der Figur 2 dargestellten Ausgangsstellung in einem Vorwärtshub, der eine horizontale, in Förderrichtung C orientierte Bewegungskomponente sowie eine vertikale, nach oben gerichtete Bewegungskomponente aufweist in eine Umkehrstellung bewegbar, in der die Enden 10.1 und 10.2 der Federelemente beispielsweise in vertikaler Richtung übereinander liegen, sowie in einem Rückhub, der eine horizontale entgegen der Förderrichtung C orientierte Bewegungskomponente sowie eine vertikale nach unten gerichtete Bewegungskomponente aufweist, aus der Umkehrstellung zurück in die Ausgangsstellung bewegbar.

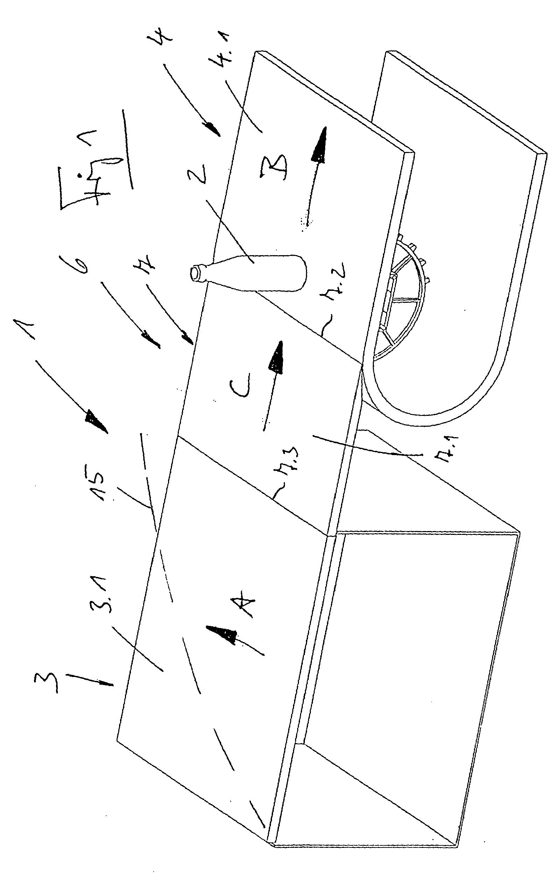

Durch ein in der Figur 1 mit den unterbrochenen Linien 15 angedeutetes Führungsgeländer wird der zunächst sehr breite Flaschen- oder Behälterstrom auf dem Transporteur 3 zusammengeführt und am Übergang zum Hilfstransporteur 6 werden die einzelnen Flaschen auf diesen Hilfstransporteur 6 bewegt bzw. geschoben. Durch die vom Antrieb 12 erzeugte Schwingbewegung des Überschubbleches 7 mit der horizontalen und vertikalen Komponente erfolgt ein problemloses Weiterbewegen der Flaschen 2 auf dem Zwischentransport 6 und damit ein problemloses Überleiten dieser Flaschen 2 vom Transporteur 3 auf den Transporteur 4.

Im Detail erfolgt die Schwingbewegung des Trägers 9 und des Überschubbleches 7 beispielsweise in der Form, dass der Träger 9 bei jeder vollen Schwingung während des Vorwärtshubes in die Umkehrstellung mit hoher Beschleunigung bzw. Geschwindigkeit und bei jedem Rückhub aus der Umkehrstellung in die Ausgangsstellung mit verminderter Geschwindigkeit bewegt wird, sodass bei auf die Masse der Flaschen 2 abgestimmter Schwingbewegung die auf dem Überschubblech 7 angeordneten Flaschen 2 durch den Vorwärtshub bedingt Mikrosprünge ausführen, d.h. jeweils einen kleinen Sprung in Förderrichtung C ausführen, ohne dass die auf die Flaschen 2 übertragene Menge an (Bewegungs)Energie dazu führt, dass die Flaschen Gefahr laufen umzufallen.

Grundsätzlich besteht weiterhin auch die Möglichkeit, den Träger 9 und das Überschubblech 7 durch den Antrieb 12 derart zu bewegen, dass ein relativ langsamer Vorwärtshub erfolgt, bei dem die Flaschen ihren Berührungskontakt mit der Oberseite des Überschubbleches nicht verlieren, während dann der Rückhub derart schnell und beschleunigt erfolgt, dass unter Berücksichtigung des Reibungskoeffizienten zwischen den Flaschen 2 und dem Überschubblech 7 und der Masse der Flaschen 2 diese bei dem Rückhub nicht mit dem Überschubblech 7 mitgeführt werden, das Überschubblech vielmehr unter der jeweiligen Flasche 2 zurückbewegt wird, ohne das sich diese dabei mitbewegt.

Weiterhin ist eine Bewegung des Trägers 9 durch den Antrieb 12 in der Form möglich, dass Vorwärtshub und Rückhub jeweils mit derselben Geschwindigkeit bzw. mit dem selben Geschwindigkeitsverlauf erfolgen, und zwar unter Berücksichtigung des Reibungskoeffizienten zwischen den Flaschen 2 und dem Überschubblech 7 und unter Berücksichtigung der Masse der Flaschen 2 derart, dass die Flaschen 2 beim Vorwärtshub in Folge der nach oben gerichteten Bewegungskomponente und der hieraus resultierenden Erhöhung der Normalkraft, mit der die Flaschen 2 auf der Oberseite 7.1 des Überschubbleches 7 aufstehen, in Transportrichtung C bewegt werden, beim Rückhub aber in Folge der nach unten gerichteten Bewegungskomponente und der hieraus resultierenden Reduzierung der Normalkraft, mit der die Flaschen 2 auf die Oberseite 7.1 des Überschubbleches 7 aufstehen, ein Mitbewegen der Flaschen 2 mit dem Überschubblech 7 nicht erfolgt.

Während bei der in den Figuren 1 und 2 dargestellten Ausführungsform davon ausgegangen wurde, dass das Überschubblech 7 mit dem Rand 7.3 bis unmittelbar an den Transporteur 3 reicht, ist in der Figur 3 als weitere Ausführungsform eine Transporteinrichtung 1 a mit einem Hilfstransporteur 6a dargestellt, bei dem auf einem dem Träger 9 entsprechenden Träger 9a zwar wiederum das Überschubblech 7 im Bereich seines Randes 7.3 gehalten ist, auf dem allerdings zwischen dem Transporteur 3 und dem Überschubblech 7 ein weiteres Überschubblech 16 vorgesehen ist, welches mit einem Abstandhalter 17 unmittelbar an der Oberseite des Trägers 9a befestigt ist, und zwar derart, dass die Oberseite 16.1 des Überschubbleches 16.1 niveaugleich oder etwa niveaugleich mit der Oberseite 7.1 des Überschubbleches 7 liegt. Bei dieser Ausführung werden die Flaschen 2 von dem Transporteur 3 zunächst auf das Überschubblech 16, dann auf das Überschubblech 7 und von diesem auf den Transporteur 4 bewegt, wobei die Schwingungsbewegung sowohl des Überschubbleches 16, als auch des Überschubbleches 7 ein problemloses Überführen der Flaschen 2 von dem Transporteur 3 an den Transporteur 4 sicherstellt.

Die Erfindung wurde voranstehend an Ausführungsbeispielen beschrieben. Es versteht sich, dass zahlreiche Änderungen sowie Abwandlungen möglich sind. So wurde vorstehend die Erfindung im Bereich einer Abgabe oder eines Auslaufs einer Behandlungsmaschine, beispielsweise eines Pasteurs beschrieben. Selbstverständlich kann die erfindungsgemäße Transporteinrichtung so ausgeführt sein, dass sie eine Behälteraufgabe bildet, an der die über einen Transporteur zugeführten Flaschen oder dgl. Behälter an einen Transporteur weitergeleitet werden, der dann Teil einer Behälterbehandlungsmaschine, beispielsweise eines Pasteurs ist. Im einfachsten Fall sind dabei die vorstehend im Zusammenhang mit den Figuren beschriebenen Funktionen der Transporteure 3 und 4 vertauscht, d. h. der Transporteur 3, der dann z.B. eine reduzierte Förderbreite aufweist, dient zum Zuführen der Behälter bzw. Flaschen 2 und der Transporteur 4, der dann z.B. eine vergrößerte Förderbreite aufweist, bildet den der Behandlungsmaschine, beispielsweise dem Pasteur zugeordneten Transporteur.

Weiterhin wurde vorstehend davon ausgegangen, dass an den Enden des Trägers 9 bzw. 9a jeweils ein Paar von Federelementen 10 vorgesehen ist. Selbstverständlich ist es auch möglich, weitere Federelemente 10 zwischen den Enden des jeweiligen Trägers anzuordnen.

Weiterhin ist es möglich, anstelle des durchgehenden Befestigungsprofils 13 auch einzelne Befestigungselemente vorzusehen, die dann so ausgeführt sind, dass sie ebenfalls das Überschubblech 7 antriebsmäßig mit dem Träger 9 bzw. 9a verbinden, zugleich aber eine gewisse Schwenkbewegung zwischen dem Überschubblech und diesem Träger ermöglichen.

### Bezugszeichenliste

- 1: Transporteinrichtung
- 2: Flasche
- 3,4: Transporteur
- 5: Transportband oder Scharnierbandkette
- 6, 6a: Hilfstransporteur
- 7: Überschubblech
- 7.1: Oberseite des Überschubbleches 7
- 7.2, 7.3: Rand des Überschubbleches 7
- 8: Schwingungsantrieb
- 9, 9a: Träger
- 10: Federelemente
- 10.1, 10.2: Ende des Federelementes 10
- 11: Rahmen
- 12: Antrieb
- 13: Befestigungsprofil
- 13.1: Schenkel
- 13.2: Jochabschnitt
- 13.3: Abwinklung
- 14: Befestigungsprofil
- 15: Führungsgeländer
- 16: Überschubblech
- 16.1: Oberseite des Überschubbleches 16
- 17: Abstandhalter

- A, B, C: Transportrichtung
- BE .: horizontale Bezugsebene
- α: Winkel

## Patentansprüche

1. Transportvorrichtung für Flaschen (2), Dosen oder dgl. Behälter, mit wenigstens zwei jeweils eine Transportfläche (3.1, 4.1) für die Behälter bildenden und in einer Transportstrecke aufeinander folgenden Transporteuren (3, 4), mit einem Übergabe- oder Hilfstransporteur (6, 6a), dessen von wenigstens einem Transportelement (7, 16) gebildete Transportfläche (7.1, 16.1) die Transportflächen (3.1, 4.1) der Transporteure (3, 4) miteinander verbindet, sowie mit einem Schwingungsantrieb (8) zur Erzeugung einer oszillierenden Schwingungsbewegung des wenigstens einen Transportelementes (7, 16) des Hilfstransporteurs (6, 6a) in einer horizontalen, in Förderrichtung (C) des Hilfstransporteurs (6, 6a) orientierten Achse,
**dadurch gekennzeichnet, dass** der Schwingungsantrieb (8) so ausgebildet ist, dass die Schwingungsbewegung des wenigstens einen Transportelementes (7, 16) des Hilfstransporteurs (6, 6a) zugleich auch eine vertikale Bewegungskomponente aufweist.

2. Transporteinrichtung nach Anspruch 1, **dadurch gekennzeichnet, dass** der Schwingungsantrieb derart ausgebildet ist, dass durch die Schwingungsbewegung die auf die Transportfläche (7.1, 16.1) des Hilfstransporteurs (6, 6a) wirkende Normalkraft der Behälter während eines Vorwärtshubes und/oder eines Rückhubes der jeweiligen Schwingbewegung reduziert oder vollständig aufgehoben wird.

3. Transporteinrichtung nach Anspruch 1 oder 2, **dadurch gekennzeichnet, dass** der Schwingungsantrieb derart ausgebildet ist, dass durch die Schwingbewegung die auf der Transportfläche (7.1, 16.1) des Zwischentransporteurs (6, 6a) aufstehenden Behälters (2) während des Vorwärtshubes und/oder des Rückhubes der Schwingbewegung einen Bodenkontakt mit der Transportfläche (7.1, 16.1) verlieren.

4. Transporteinrichtung nach einem der vorhergehenden Ansprüche, **dadurch gekennzeichnet, dass** die Transporteure (3, 4) bezüglich ihrer Transportrichtung (A, B) in einem Winkel, beispielsweise in einem rechten Winkel aneinander anschließen.

5. Transporteinrichtung nach einem der vorhergehenden Ansprüche, **dadurch gekennzeichnet, dass** das wenigstens eine Transportelement des Hilfstransporteurs (6, 6a) ein Überschubblech (7, 16) ist.

6. Transporteinrichtung nach einem der vorhergehenden Ansprüche, **dadurch gekennzeichnet, dass** die Transportfläche (7.1,16.1) des Hilfstransporteurs (6, 6a) von wenigstens zwei Transportelementen (7, 16) gebildet ist, die in Transportrichtung (C) des Hilfstransporteurs (6, 6a) und/oder quer zur Transportrichtung (C) des Hilfstransporteurs (6) aneinander anschließen.

7. Transporteinrichtung nach einem der vorhergehenden Ansprüche, **dadurch gekennzeichnet, dass** der Schwingungsantrieb (8) wenigstens einen gefederten Träger (9) aufweist, der durch ein Antriebselement (12) für die Schwingbewegung antreibbar ist und an dem wenigstens das wenigstens eine Transportelement (7, 16) des Hilfstransporteurs befestigt ist.

8. Transporteinrichtung nach einem der vorhergehenden Ansprüche, **dadurch gekennzeichnet, dass** wenigstens ein erstes Transportelement (7) des Hilfstransporteurs (6, 6a) einerseits gelenkig mit dem Träger (9) verbunden ist und sich andererseits auf einem der Transporteure (3, 4) oder auf dessen Transportfläche (3.1, 4.1) abstützt.

9. Transporteinrichtung nach einem der vorhergehenden Ansprüche, **dadurch gekennzeichnet, dass** wenigstens ein zweites Transportelement (16) des Hilfstransporteurs (6a) starr mit dem Träger (9) des Schwingungsantriebs (8) verbunden ist.

10. Transporteinrichtung nach einem der vorhergehenden Ansprüche, **dadurch gekennzeichnet, dass** wenigstens ein erstes Transportelement (7) und wenigstens ein zweites Transportelement (16) in Transportrichtung (C) des Hilfstransporteurs (6a) an einander anschließen.

11. Transporteinrichtung nach einem der vorhergehenden Ansprüche, **dadurch gekennzeichnet, dass** das wenigstens eine Transportelement (7, 16) durch den Schwingungsantrieb (8) für einen Vorwärtshub der Schwingungsbewegung aus einer Ausgangsstellung in eine Umkehrstellung sowie für einen Rückhub aus der Umkehrstellung in die Ausgangsstellung derart bewegbar ist, dass das wenigstens eine Transportelement (7, 16) bei jedem Vorwärtshub in Förderrichtung (C) des Zwischenträgers (6, 6a) sowie gleichzeitig in vertikaler Richtung nach oben bewegt wird.

12. Transporteinrichtung nach einem der vorhergehenden Ansprüche, **dadurch gekennzeichnet, dass** der Träger (9) des Schwingungsantriebs (8) oder das wenigstens eine Transportelement (7, 16) durch Federelemente, z.B. durch Blattfedern (10) gefedert gehalten ist.

13. Transporteinrichtung nach Anspruch 12, **dadurch gekennzeichnet, dass** die Blattfedern (10) in der Ausgangsstellung gegenüber der Vertikalen derart geneigt sind, dass das wenigstens eine Transportelement (7, 16) bei jedem Vorwärtshub in Förderrichtung (C) des Hilfstransporteurs (6, 6a) sowie gleichzeitig in vertikaler Richtung nach oben bewegt wird.

14. Transporteinrichtung nach einem der vorhergehenden Ansprüche, **dadurch gekennzeichnet, dass** das wenigstens eine Transportelement (7, 16) durch den Schwingungsantrieb (8) derart angetrieben ist, dass der Vorwärtshub mit größerer Geschwindigkeit und/oder Beschleunigung als der Rückhub erfolgt.

15. Transporteinrichtung nach einem der vorhergehenden Ansprüche, **dadurch gekennzeichnet, dass** das wenigstens eine Transportelement (7, 16) durch den Schwingungsantrieb (8) derart angetrieben ist, dass der Vorwärtshub und der Rückhub mit gleicher Geschwindigkeit und/oder Beschleunigung erfolgen.

16. Transporteinrichtung nach einem der vorhergehenden Ansprüche, **dadurch gekennzeichnet, dass** das wenigstens eine Transportelement (7, 16) durch den Schwingungsantrieb (8) derart angetrieben ist, dass der Rückhub mit einer größeren Geschwindigkeit und/oder Beschleunigung als der Vorwärtshub erfolgt.

17. Transporteinrichtung nach einem der vorhergehenden Ansprüche, **dadurch gekennzeichnet, dass** einer der wenigstens zwei Transporteure (3, 4) Teil einer BehälterBehandlungsmaschine, beispielsweise eines Pasteurs ist, und der andere der wenigstens zwei Transporteure (3, 4) zum Zuführen der Behälter (2) an oder zum Abführen der Behälter (2) von der Behandlungsmaschine dient.

18. Transporteinrichtung nach einem der vorhergehenden Ansprüche, **dadurch gekennzeichnet, dass** die Transportfläche (7.1, 16.1) des Hilfstransporteurs (6, 6a) in einer gemeinsamen Ebene mit der Transportfläche (3.1, 4.1) des anschließenden und/oder vorausgehenden Transporteurs (3, 4) liegt.
